# EUROPÄISCHE PATENTSCHRIFT

(11) **EP 1 291 256 B1**
(45) Veröffentlichungstag und Bekanntmachung des Hinweises auf die Patenterteilung: **06.09.2006**
(21) Anmeldenummer: 02019827.1
(22) Anmeldetag: 06.09.2002
(51) Int. Cl.: B60T 8/36, H01H 47/32, H01F 7/18, H02H 9/04

(54) **Verfahren zum Betreiben eines Magnetventiles für pneumatische Bremszylinder**
Method for operating a magnetic valve for pneumatic brake cylinders
Procédé de commande de fonctionnement d'une electrovanne pour cylindres de freins pneumatiques

(30) Priorität: 10.09.2001 DE 10144297; 17.01.2002 DE 10201453
(43) Veröffentlichungstag der Anmeldung: 12.03.2003
(73) Patentinhaber: KNORR-BREMSE SYSTEME FÜR NUTZFAHRZEUGE GMBH, 80809 München (DE)
(72) Erfinder: Biedermann, Klaus, 71638 Ludwigsburg (DE); Gscheidle, Wolfgang, 71720 Oberstenfeld (DE); Van Wickeren, Thomas, 71665 Vaihingen/Enz (DE)

(56) Entgegenhaltungen:
- EP-A- 0 452 562
- DE-A- 3 905 937
- DE-A- 4 018 320
- DE-A- 4 130 712
- DE-A- 4 431 965
- US-A- 5 404 303

## Beschreibung

Die Erfindung betrifft ein Verfahren zum Betreiben eines elektrischen Magnetventiles zur Drucksteuerung von pneumatischen Bremszylindem in elektronisch-pneumatischen Bremssystemen (EBS), wobei das Magnetventil mittels eines Anzugsstromes aktiviert und mittels eines abhängig von der Versorgungsspannung getakteten Dauerstromes betrieben wird.

Bei einem elektronisch-pneumatischen Bremssystem ist jedem Bremszylinder wenigstens ein Magnetventil zugeordnet, das den Bremszylinderdruck in Abhängigkeit von dem durch das Ventil fließenden Strom steuert oder regelt.

Elektronische Bremssysteme der obengenannten Art haben den Vorteil, daß der Druck im Bremszylinder bei einer Bremsung wesentlich schneller als mit herkömmlichen Systemen aufgebaut werden kann. Hieraus resultiert der Vorteil, daß bei elektronisch-pneumatischen Bremssystemen ein wesentlich schnellerer Druckauf- und -abbau erzielt werden kann.

Herkömmliche Bauteile, wie beispielsweise Magnetventile, können derzeit nur begrenzt in derartigen elektropneumatischen Bremssystemen eingesetzt werden, da ein Ausfall derartiger Komponenten in dem sicherheitsrelevanten Bremssystem nicht immer zuverlässig und zeitnah detektiert werden konnte.

Aufgabe der Erfindung ist es, die Nachteile des Standes der Technik zu vermeiden und ein Verfahren bzw. ein Steuersystem für Magnetventile in einem elektropneumatischen Bremssystem anzugeben, das sich durch schnelles Ansprechen/Abfallen der Ventile, eine geringe Verlustleistung in der Spule im Betrieb und damit minimaler Eigenerwärmung sowie die erforderliche hohe Sicherheit bei Ausfall auszeichnet.

Erfindungsgemäß wird dies dadurch erreicht, daß beim Einschalten des Magnetventils für eine Zeitdauer t₁ ein Anzugsstrom I_{A} durch die Spule fließt, beim Umschalten von Anzugsstrom auf Haltestrom I_{H} für die Zeit t₂ bis t₃ das Ventil mit einem getakteten Dauerstromsignal betrieben wird, wobei das getaktete Dauerstromsignal mittels einer zweiten schaltbaren Diode langsam gelöscht wird und der Strom am Magnetventil über eine Rückmeldeinrichtung überwacht wird.

Um ein Magnetventil möglichst schnell aktivieren und den Bremszylinderdruck möglichst schnell aufbauen zu können ist es erforderlich, beim Einschalten einen möglichst hohen Anzugsstrom durch die Magnetventilspule fließen zu lassen. Der hohe Einschaltstrom bewirkt in der Spule eine zum Strom proportionale Magnetkraft, die das Ventil mechanisch betätigen kann.

Der hohe Anzugsstrom erzeugt im ohmschen Widerstand der Magnetventilspule eine entsprechende Verlustleistung, die das Magnetventil bei längerer Ansteuerung stark und unzulässig erwärmen kann. Um diese Verluste zu minimieren, wird bei längerer Ansteuerung des Ventiles der Spulenstrom durch versorgungsspannungsabhängige Taktung der Spulenspannung auf den minimal zulässigen Haltestrom reduziert. Dies geschieht durch PWM-(Pulsweitenmodulation)Ansteuerung der Spulenspannung, die einen arithmetischen Gleichstrom I_{D} (=Haltestrom) durch die Spule erzeugt, dem ein Wechselstromanteil I_{AC} überlagert ist.

Um den Wechselstromanteil I_{AC} durch die Spule und Mikrobewegungen im Ventil möglichst gering zu halten, wird parallel zur Magnetventilspule eine Freilaufdiode geschaltet, die den Strom in der Spule bei abgeschalteter Spulenspannung abhängig von den Spulen- und Ansteuerdaten weiterfließen läßt und somit die Magnetkraft in der Spule für eine bestimmte Zeit weiter aufrecht erhalten kann bzw. einen verzögerten Kraftabbau im Ventil zur Folge hat.

Eine derartige Schattung ist beispielsweise aus der Druckschrift EP 0 452 562 A bekannt.

Durch diese Freilaufdiode erfolgt das gewollte Abschalten des Magnetventils verzögert, was sich beim Schalten von Magnetventilen in einem elektronisch-pneumatischen Bremssystem z.B. bei ABS- oder ESP-Regelungen negativ auswirken kann. Die nachteilige Folge hiervon kann z.B.eine Verschlechterung der dynamischen Regeleigenschaften des Bremsdruckregelkreises sein.

Um diesen Nachteil zu umgehen, wird die Freilaufdiode erfindungsgemäß durch ein in Reihe mit der Diode geschaltetes Schaltelement (z.B. Transistor) versehen. Wird dieses Schaltelement geschlossen, so befindet sich das Ventil wie oben beschrieben im langsamen Freilauf. Bei geöffnetem Schaltelement ist der langsame Freilaufkreis unterbrochen, die beim Abschalten der Magnetventilspule gespeicherte magnetische Energie führt zu einer hohen Induktionsspannungsspitze an einem Masseschalter und wird lediglich durch eine parallel zum Masseschalter geschaltete Zenerdiode in der Amplitude begrenzt. Durch die hohe Rückschlagspannung über der Z-Diode wird die bei der Abschaltung der Magnetventilspule gespeicherte magnetische Energie schnell abgebaut, das Ventil bewegt sich damit entsprechend schnell in seine Ruheposition zurück.

Durch das erfindungsgemäße Verfahren, das von einer langsamen auf eine schnelle Löschung beim Abschalten des durch das Magnetventil fließenden Stromes umschaltet, erreicht man gegenüber den Magnetventilen im Stand der Technik sehr reaktionsschnelle Ventile, die sich durch schnelle Schaltzeiten und geringe Verlustleistung auszeichnet und bei dem im Wesentlichen durch das Ventil im Dauerbetriebszustand ein getakteter Gleichstrom fließt. Des weiteren können Störungen des Magnetventils durch die Rückmeldeeinrichtung sehr schnell detektiert werden. Es ist dann ein sehr schnelles Eingreifen, beispielsweise der ABS-Steuerung, möglich.

Besonders bevorzugt ist es, wenn man die Zeitdauer t₁, bei der der Anzugsstrom durch das Magnetventil abgeschaltet wird, mittels einer Stromerkennung ermittelt. Die Abschaltung erfolgt beispielsweise nach Erreichen eines Stromes > 3 A. Ebenso ist eine reine zeitgesteuerte Abschaltung in Abhängigkeit verschiedener Parameter (Versorgungsspannung, Temperatur, Spulen-/Ventilparameter, usw.) durch eine Steuereinrichtung möglich.

Die Erfindung soll nachfolgend anhand der Figuren beispielhaft beschrieben werden.

Es zeigen:
- Figur 1: den Stromverlauf am Magnetventil in Abhängigkeit von der Zeit bei Verwendung eines erfindungsgemäßen Steuersystems
- Figur 2: den Unterschied im Stromverlauf zwischen langsamer Löschung und schneller Löschung
- Figur 3: eine mögliche Schaltungsanordnung mit der ein Umschalten zwischen langsamer und schneller Löschung erfolgt
- Figur 4: eine mögliche Schaltungsanordnung mit einem invers betriebenen MOSFET-Transistor als Umschalter zwischen langsamer und schneller Löschung
- Figur 5: ein Gesamtsystem mit Überwachungseinrichtung

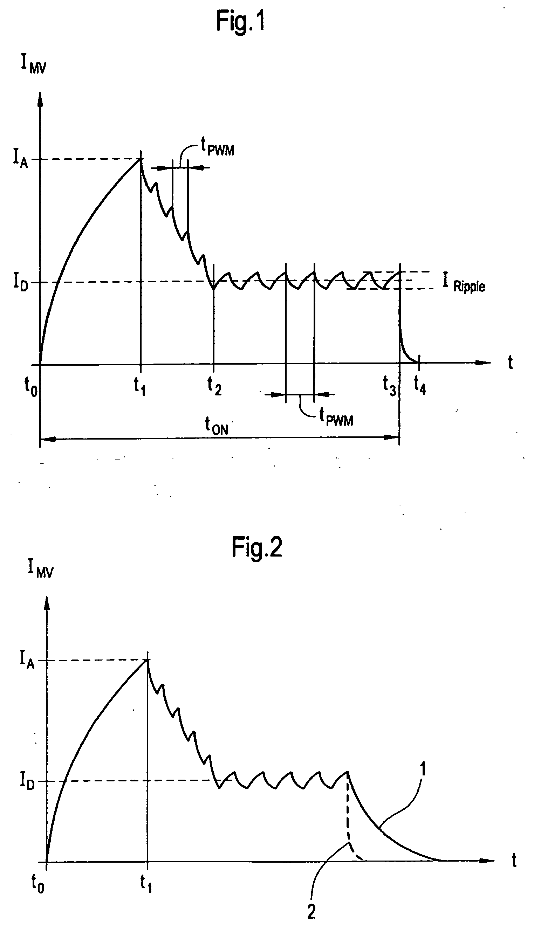

In Figur 1 ist der Stromverlauf am Magnetventil beim Einsatz eines erfindungsgemäßen Systems gezeigt. Um das zu schaltende Magnetventil schnell aktivieren zu können, wird in einem Zeitabschnitt von t₀ bis t₁ das Magnetventil mit einem hohen Anzugsstrom beaufschlagt. Der Anzugsstrom I_{A} wird z.B. durch Daueransteuerung des Schalters 14 erzielt und bei t₁ reduziert auf einen getakteten Haltestrom I_{D} durch ein z. B. pulsbreitenmoduliertes (PWM-) Ansteuersignal des Ventils. Vorliegend ist der Anzugsstrom auf z. B. 3 A begrenzt. Aufgrund der vom Einschaltzeitpunkt t₀ an aktivierten langsamen Löschung sowie des gepulsten Spannungssignales stellt sich ein Spulengleichstrom ID mit einem überlagerten geringen Wechselstrom (Ripplestrom) I_{Ripple} ein. Der Strom ist abhängig von der angesteuerten Taktfrequenz und Pulsbreite des PWM-Signales und der Magnetspulendaten.

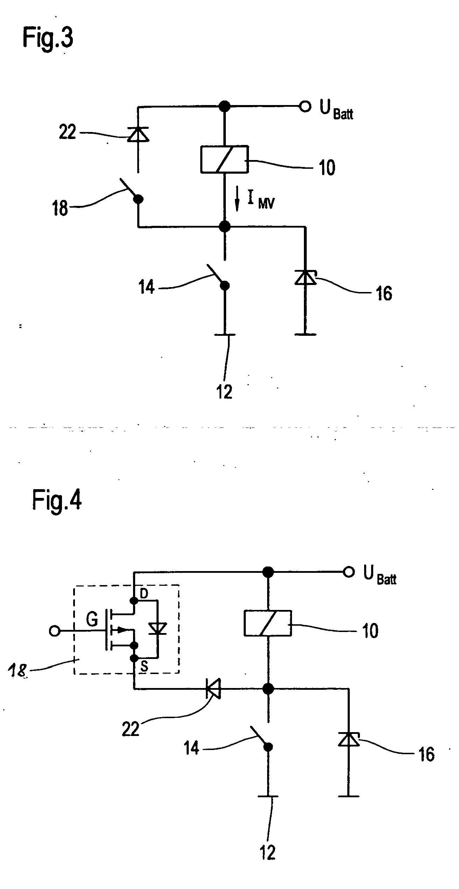

Die Zeit zwischen t₀ und t₃ ist die gesamte Ventilansteuerzeit tₒₙ und damit von dem in den Bremszylinder einzusteuemden Bremsdruck psoll.Zum Zeitpunkt t₃ wird das Magnetventil abgeschaltet, wozu gleichzeitig von langsamer auf schnelle Löschung umgeschaltet wird (Schalter 14 geöffnet). Die magnetische Energie in der Spule wird dadurch schnellstmöglich abgebaut, über die max. zulässige Abschaltamplitude (z.B. durch Z-Diode 16 aus Fig. 3) kann diese Freilaufzeit beeinflußt werden.

In Figur 2 ist nochmals der Unterschied im Zeitverhalten zwischen schneller Löschung und langsamer Löschung dargestellt.

In Kurve 1 ist der Stromverlauf abgebildet, der sich am Magnetventil ergibt, wenn lediglich die langsame Löschung eingesetzt wird, d.h. nicht das erfindungsgemäße Umschalten zwischen schneller und langsamer Löschung vorgenommen wird. Durch die permanent eingeschaltete langsame Löschung auch beim Abschalten der Spule wird das Ventil ein träges Zeitverhalten haben. Die Verlustleistung in der Spule wird minimiert, da das Ventil mit dem minimal zulässigen Haltestrom betrieben werden kann.

Kurve 2 gibt den Stromverlauf bei schneller Löschung wieder. Wird zum endgültigen Abschaltzeitpunkt des Ventiles von langsamer auf schnelle Löschung umgeschaltet, so wird die Spule schnellstmöglich entmagnetisiert, das Ventil und damit der Abbau des Bremsdruckes im Brenszylinder erfolgen dadurch ebenfalls schnellstmöglich.

In Figur 3 ist eine mögliche Schaltung, die ein Umschalten von schneller auf langsame Löschung ermöglicht, dargestellt. Das Magnetventil ist mit der Bezugsziffer 10 bezeichnet. Am Magnetventil liegt die Bordspannung von z.B. 24 V gegenüber Masse 12 an. Der Spulenstrom durch das Magnetventil 10 ist mit I_{MV} bezeichnet. Wird der Schalter 14 geschlossen oder PWM-getaktet, wird die Ventilspule bestromt. Die schnelle Löschung des Anzugsstroms erfolgt über die Diode 16. Die Diode ist bevorzugt als Zenerdiode ausgebildet oder z. B. direkt im Schalter 14 integriert (z.B. FET mit integrierter Avalanche-Diode) oder durch geeignete andere Maßnahmen ausführbar.

Zum Betrieb des Magnetventils bleibt Schalter 14 geschlossen bzw. wird über ein PWM-Signal von der Steuereinheit getaktet angesteuert. Die langsame Löschung wird aktiviert, in dem der zweite Schalter 18 geschlossen und damit die Freilaufdiode 22 parallel zu Magnetspule geschaltet wird. Das getaktete Spannungssignal am Schalter 14 ist mit Bezugsziffer 20 bezeichnet. Bevorzugt kann Schalter 18 z.B. als P-Kanal-MOSFET mit integrierter Freilaufdiode im Inversbetrieb ausgeführt werden (siehe Fig. 4). Diesbezüglich wird auf Figur 4 verwiesen. Die in Figur 4 gezeigte Schaltung kann bevorzugt eingesetzt werden, um die Verluste im Schalter 18 bei langsamer Löschung zu minimieren.

Figur 3 ist lediglich ein Ausführungsbeispiel für eine Ausführungsform einer Schaltung zur schnellen und langsamen Löschung. Die Erfindung soll keineswegs auf dieses Ausführungsbeispiel beschränkt sein, sondern vielmehr sämtliche mögliche Schaltungen umfassen, die den prinzipiellen Gedanken der Umschaltung einer schnellen auf eine langsame Löschung ermöglichen, nachdem das Magnetventil aktiviert wurde.

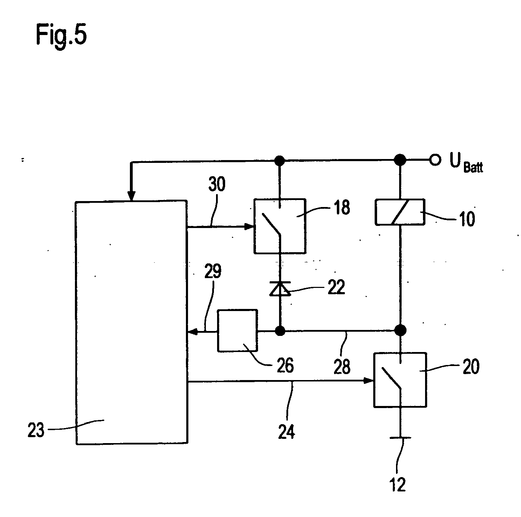

Figur 5 zeigt die Gesamtanordnung eines Steuersystems zur Ansteuerung eines Magnetventiles 10 gemäß der Erfindung. Die Ansteuerung des Magnetventiles 10 geschieht über die Endstufe 20, die den Schalter 14 umfaßt, über Leitung 24. Erfindungsgemäß wird der Strom am Magnetventil über eine Rückmeldeeinrichtung 26 und Leitung 28 überwacht. Der Mikrocontroller (µC) 23 wertet die Rückmeldesignale von Leitung 29 aus und bestimmt die zur Umschaltung zwischen langsamer und schneller Löschung notwendigen Parameter und die z.B. versorgungsspannungsabhängige Taktfrequenz des PWM-Signales und paßt die Ansteuerung der Endstufen 18 und 20 über die Steuerleitungen 24 und 30 an. Die Umschaltung der Löschung geschieht durch Schließen des zweiten Schalters 18, der den Schalter 18 aus Fig. 3 beinhaltet, und wird vom Mikrocontroller 23 über die Leitung 30 angesteuert.

Die Ansteuerung des Magnetventils 10 geschieht mit Hilfe eines getakteten Spannungssignals, das in der Ventilspule einen getakteten Gleichstrom fließen läßt.

Durch die Erfindung wird erstmals ein Steuerverfahren angegeben, mit dem ein sehr schnelles Magnetventil realisiert werden kann, bei dem die Verlustleistungen im Magnetventil gegenüber Magnetventilen des Standes der Technik deutlich reduziert werden. Mit der Erfindung ist es möglich, Magnetventile genau auf einen speziellen dynamischen Anwendungsfall auszuwählen und dort optimal zu betreiben. Des weiteren wird durch eine Überwachungseinrichtung ein sicherer Betrieb in einem elektropneumatischen Bremssystem ermöglicht.

### Bezugszeichenliste

- 1: Stromkurve am Magnetventil bei langsamer Löschung
- 3: Stromkurve am Magnetventil bei schneller Löschung
- 10: Magnetventil
- 12: Masse
- 14: Erster Schalter zur Umschaltung des Spulenfreilaufes
- 16: Zener-Diode
- 18: Zweiter Schalter zur Ansteuerung des Magnetventiles
- 20: getaktetes Spannungssignal am Magnetventil Freilaufdiode
- 23: Mikrocontroller
- 24: Leitung vom Mikrocontroller zur Endstufe
- 26: Überwachungseinrichtung
- 28: Leitung von der Ventilspule zur Überwachungseinrichtung
- 29: Leitung vom Mikrocontroller zur Überwachungseinrichtung
- 30: Leitung vom Mikrocontroller zu Schalter 14

## Patentansprüche

1. Verfahren zum Betreiben eines Magnetventiles (10) für pneumatische Bremszylinder, wobei das Magnetventil (10) über eine Endstufe (20) mittels eines Anzugsstromes aktiviert und mittels eines getakteten Dauerstromes betrieben wird, umfassend folgende Schritte:
1.1 zum Einschalten des Ventils (10) wird dieses über einen Schalter (14) der Endstufe (20) mit einem Anzugsstrom für eine Zeitdauer t₁ beaufschlagt und eine Freilaufdiode (22) über einen zweiten Schalter (18) zugeschaltet, wobei die Freilaufdiode (22) parallel zum Ventil (10) unter Ausbildung eines Freilaufkreises angeordnet ist;
1.2 nach Erreichen des Anzugsstromes wird auf einen pulsweitenmodulierten, getakteten Haltestrom umgeschaltet, ergebend ein getaktetes Dauerstromsignal, wobei
1.3 das getaktete Dauerstromsignal mittels der Freilaufdiode (22) langsam gelöscht wird, so dass sich ein Spulengleichstrom mit überlagertem geringem Wechselstrom einstellt;
1.4 zum Abschalten des Magnetventils wird der Schalter (14) der Endstufe (20) und der zweite Schalter (18) geöffnet, so dass eine schnelle Löschung unter Umgehung des Freilaufs über eine parallel zur Endstufe (20) geschaltete Überspannungsbegrenzungseinrichtung (16) erfolgt, **dadurch gekennzeichnet, dass**
1.5 der Strom am Magnetventil von einer Rückmeldeeinrichtung (26) überwacht wird, wobei die Rückmeldeeinrichtung (26) Rückmeldesignale an einen Mikrocontroller (23) übermittelt und vom Mikrocontroller die Rückmeldesignale ausgewertet und die zur Umschaltung zwischen langsamer und schneller Löschung notwendigen Parameter zur Verfügung gestellt und die Endstufen (14, 20) angesteuert werden.

2. Verfahren nach Anspruch 1, **dadurch gekennzeichnet, dass**
die Zeit t₁ durch den Anzugsstrom durch das Magnetventil (10) bestimmt wird und die Abschaltung nach Erreichen eines vorgegebenen Grenzwertes erfolgt

3. Verfahren nach einem der Ansprüche 1 oder 2, **dadurch gekennzeichnet, dass** die Überspannungsbegrenzungseinrichtung (16) ein Spannungsbegrenzungselement ist.

4. Verfahren nach einem der Ansprüche 1 bis 3, **dadurch gekennzeichnet, dass** die Überspannungsbegrenzungseinrichtung (16) eine Zener-Diode ist.

5. Verfahren nach einem der Ansprüche 1 bis 3, **dadurch gekennzeichnet, dass** die Überspannungsbegrenzungseinrichtung (16) eine Avalanche-Diode ist.

6. Verfahren nach einem der Ansprüche 1 bis 5, **dadurch gekennzeichnet, dass** die Überspannungsbegrenzungseinrichtung (16) in den Schalter (14) der Endstufe (20) integriert ist.

## Claims

1. Method of operating a solenoid valve (10) for pneumatic brake cylinders, wherein said solenoid valve (10) is activated via a terminal stage (20) by means of an pull-up current and operated by means of a clocked constant current, comprising the following steps:
1.1 for starting this valve (10), an pull-up current is applied via a switch (14) of said terminal stage (20) for a period t₁ while a free-wheeling diode (22) is connected via a second switch (18), with said free-wheeling diode (22) being arranged in parallel with said valve (10) for forming a free-wheeling circuit;
1.2 switching over to a pulse-width modulated clocked holding current after the pull-up current has been reached, which furnishes a clocked continuous-current signal;
1.3 said clocked continuous-current signal is slowly reduced to zero so that a direct coil current with superimposed slight alternating current is adjusted;
1.4 for turning said solenoid valve off, said switch (14) of said terminal stage (20) and said second switch (18) are opened so that a rapid reduction to zero takes place, with circumvention of said free-wheeling circuit via an overvoltage-limiting means (16);
**characterised in that**
1.5 the current at the solenoid valve is monitored by a repeat-back means (26), with said repeat-back means (26) communicating repeat-back signals to a micro controller (23) and said micro controller evaluates said repeat-back signals and supplies the parameters required for switch-over between slow and rapid reduction to zero and controls said terminal stages (14, 20).

2. Method according to Claim 1, **characterised in that** the time t₁ is determined by the pull-up current flowing through said solenoid valve (10) and that cut-off takes place after a predetermined limit value has been reached.

3. Method according to any of the Claims 1 or 2, **characterised in that** said overvoltage-limiting means (16) is a voltage-limiting element.

4. Method according to any of the Claims 1 to 3, **characterised in that** said overvoltage-limiting means (16) is a Zener diode.

5. Method according to any of the Claims 1 to 3, **characterised in that** said overvoltage-limiting means (16) is an avalanche diode.

6. Method according to any of the Claims 1 to 5, **characterised in that** said overvoltage-limiting means (16) is integrated into said switch (14) of said terminal stage (20).

## Revendications

1. Procédé à commander une vanne à solénoïde (10) pour cylindres pneumatiques de frein, dans lequel ledit vanne à solénoïde (10) est activé via un étage terminal (20) moyennant un courant d'attraction et commandé moyennant un courant permanent cyclé, comprenant les étapes suivantes :
1.1 pour le démarrage de cette vanne (10), un courant d'attraction est appliqué via un commutateur (14) dudit étage terminal (20) pour une période t₁ pendant qu'une diode de marche à vide (22) est reliée via un deuxième commutateur (18), à ladite diode de marche à vide (22) étant disposée en parallèle à ladite vanne (10) afin de former un circuit de marche à vide ;
1.2 commutation à un courant de maintien cyclé et modulé en largeur d'impulsion après le courant d'attraction était atteint, ce qui fournit un signal cyclé en courant permanent ;
1.3 ledit signal cyclé en courant permanent est lentement remis à zéro d'une telle manière, qu'un courant direct de bobine à courant alternatif minime superposé soit ajusté ;
1.4 pour la déconnexion de ladite vanne à solénoïde, ledit commutateur (14) dudit étage terminal (20) et ledit deuxième commutateur (18) sont ouverts d'une telle manière, qu'une remise à zéro rapide se fasse, en contournant ledit circuit de marche à vide via un moyen à limiter la surtension (16);
**caractérisé en ce**
1.5 que le courant à ladite vanne à solénoïde est surveillé par un moyen répétiteur (26), audit moyen répétiteur (26) communiquant des signaux de retour à un moyen micro de commande (23) et ledit moyen micro de commande évalue lesdits signaux de retour, fournissant des paramètres requis pour la commutation entre la remise à zéro lente et rapide et commandant lesdits étages terminaux (14, 20).

2. Procédé selon la revendication 1, **caractérisé en ce que** le temps t₁ est déterminé par le courant d'attraction passant par ladite vanne à solénoïde (10) et **en ce que** la déconnexion se fait après une valeur limite prédéterminée était atteinte.

3. Procédé selon une quelconque des revendications 1 ou 2, **caractérisé en ce que** ledit moyen à limiter la surtension (16) est un élément à limiter la tension.

4. Procédé selon une quelconque des revendications 1 à 3, **caractérisé en ce que** ledit moyen à limiter la surtension (16) est une diode Zener.

5. Procédé selon une quelconque des revendications 1 à 3, **caractérisé en ce que** ledit moyen à limiter la surtension (16) est une diode à avalanche.

6. Procédé selon une quelconque des revendications 1 à 5, **caractérisé en ce que** ledit moyen à limiter la surtension (16) est intégré dans ledit commutateur (14) dudit étage terminal (20).
